# EUROPEAN PATENT APPLICATION

(11) **EP 1 670 277 A1**
(43) Date of publication of application: **14.06.2006**
(21) Application number: 05027012.3
(22) Date of filing: 09.12.2005
(51) Int. Cl.: H04Q 7/38

(54) **System and method for mode switching and frequency band switching in a cellular system**

(30) Priority: 09.12.2004 KR 2004103613
(71) Applicant: Samsung Electronics Co., Ltd., Suwon-si, Gyeonggi-Do (KR)
(72) Inventor: Lee, Ok-Seon, Yeongtong-gu Suwon-si Gyeonggi-do (KR); Yun, Sang-Boh, Yeongtong-gu Suwon-si Gyeonggi-do (KR); Park, Seung-Young, Yeongtong-gu Suwon-si Gyeonggi-do (KR); Kim, Yung-Soo, Yeongtong-gu Suwon-si Gyeonggi-do (KR)
(74) Representative: Grünecker, Kinkeldey, Stockmair & Schwanhäusser Anwaltssozietät

(57) **Abstract**

A method for switching a current duplexing mode of a mobile station in a cellular system in which a base station supports multiple duplexing modes. The method includes determining if it is necessary to switch the current duplexing mode of the mobile station in a predetermined scheduling period, and switching the current duplexing mode of the mobile station when there are available wireless resources for a target duplexing mode into which the mobile station wants to switch the current duplexing mode.

## Description

The present invention relates generally to a cellular system for supporting multiple duplexing modes or multiple frequency bands, and more particularly to a method and system for switching a duplexing mode or a frequency band of a mobile station in a cellular system.

With development of the wireless communication industry, various wireless communication schemes have been proposed. Due to such communication schemes, in addition to the existing communication networks, each supporting a specific wireless communication scheme, there are new communication networks that can simultaneously support different communication schemes. That is, it is expected that there will soon be a wireless communication environment in which mobile communication networks capable of supporting different wireless communication schemes are mixed. In such a wireless communication environment, it is necessary for mobile users to select and use a proper wireless communication scheme according to a wireless channel condition.

The operation mode of a Hybrid Duplexing (HD) system includes a Frequency Division Duplexing (FDD) mode and a Time Division Duplexing (TDD) mode. In the HD system, a base station determines an operation mode of a mobile station. The base station allocates a channel corresponding to the determined operation mode, i.e., an FDD mode channel or a TDD mode channel, to the mobile station. The mobile station operates in a TDD mode or an FDD mode using the channel allocated by the base station.

However, in consideration of the mobility of the mobile station, a mobile station operating in an FDD mode may be allocated a TDD mode channel or a mobile station operating in a TDD mode may be allocated an FDD mode channel. In this case, the mobile stations must change their operation mode.

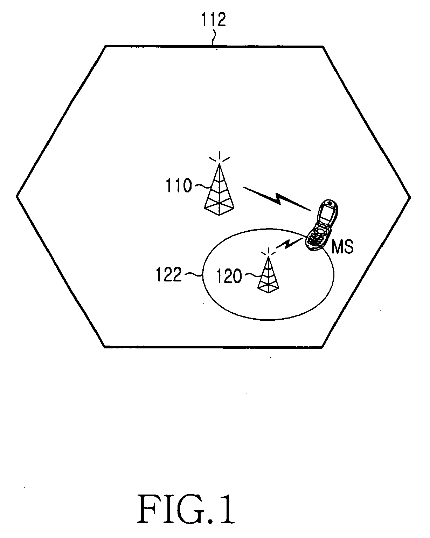

FIG. 1 illustrates a conventional HD system that supports an FDD mode and a TDD mode. The HD system illustrated in FIG. 1 includes a first base station 110 supporting an FDD mode and a second base station 120 supporting a TDD mode. In FIG. 1, reference number 112 designates an area for providing a service in the FDD mode by the first base station 110 (hereinafter, referred to as "FDD area") and reference number 122 designates an area for providing a service in the TDD mode by the second base station 120 (hereinafter, referred to as "TDD area").

As illustrated in FIG. 1, the TDD area 122 is included in the FDD area 112. Therefore, a mobile station located in the TDD area 122 can use a TDD mode service and an FDD mode service.

Currently, there has been no standard arranged for the conventional HD system and its operation process. Therefore, in the conventional HD system, even a mobile station located in an area providing the FDD mode service and the TDD mode service is unable to switch its operation mode. For example, when a mobile station operating in the TDD mode moves into an FDD area, the mobile station may be unable to receive the TDD mode service. In this case, the mobile station must interrupt its use of the TDD mode service and then must perform a separate process for the FDD mode service. Also, for the mobile station moving in the opposite direction, the same problem occurs.

Additionally, there is no proposed scheme for frequency band switching of a mobile station according to movement of the mobile station and change of the electric wave environment. For example, a mobile station using a service in a wideband area is unable to continue using the same service in a narrowband area. In this case, the mobile station must interrupt use of the service of the wideband area and then must perform a separate process for the service of the narrowband area.

Therefore, a scheme is required for switching an operation mode or a use frequency band of a mobile station in a wireless network in which various wireless communication schemes co-exist.

Accordingly, the present invention has been designed to solve the above and other problems occurring in the prior art.

It is the object of the present invention to provide a method for selecting a duplexing mode of a mobile station in a hybrid duplexing system.

This object is solved by the subject matter of the independent claims.

Preferred embodiments are defined in the dependent claims.

It is an aspect of the present invention to provide a method for switching an operation mode of a mobile station according to movement of the mobile station and a change of the electric wave environment in a hybrid duplexing system.

It is an aspect of the present invention to provide a method for selecting an operation band of a mobile station in a multi-band system utilizing at least two different frequency bands.

It is still another aspect of the present invention to provide a method for switching an operation mode of a mobile station according to movement of the mobile station and a change of the electric wave environment in a multi-band system utilizing at least two different frequency bands.

It is still another aspect of the present invention to provide a method for establishing an operation mode of a mobile station according to requirements and characteristics of the mobile station in a system utilizing a TDD scheme and an FDD scheme.

It is still another aspect of the present invention to provide a method for supporting switching between a TDD scheme and an FDD scheme in a system utilizing the TDD scheme and the FDD scheme.

It is still another aspect of the present invention to present a standard for switching between a TDD scheme and an FDD scheme in a system utilizing the TDD scheme and the FDD scheme.

It is still another aspect of the present invention to provide a method for signaling between a mobile station and a base station for switching between a TDD scheme and an FDD scheme in a system utilizing the TDD scheme and the FDD scheme.

It is still another aspect of the present invention to provide a method for determining an operation mode of a mobile station in a system utilizing the TDD scheme and the FDD scheme.

It is still another aspect of the present invention to provide a method for switching an operation mode of a mobile station in a system utilizing the TDD scheme and the FDD scheme.

It is still another aspect of the present invention to provide a method for selecting a mobile station, which requires operation mode switching in a system utilizing the TDD scheme and the FDD scheme.

It is still another aspect of the present invention to provide a method for supporting switching between frequency bands having different bandwidths in a multi-band system utilizing at least two frequency bands having different bandwidths.

It is still another aspect of the present invention to present a standard for switching between frequency bands having different bandwidths in a multi-band system utilizing at least two frequency bands having different bandwidths.

It is still another aspect of the present invention to provide a method for signaling between a mobile station and a base station for switching between frequency bands having different bandwidths in a multi-band system utilizing at least two frequency bands having different bandwidths.

It is still another aspect of the present invention to provide a method for determining an operation mode of a mobile station in a multi-band system utilizing at least two frequency bands having different bandwidths.

It is still another aspect of the present invention to provide a method for switching an operation mode of a mobile station in a multi-band system utilizing at least two frequency bands having different bandwidths.

It is still another aspect of the present invention to provide a method for selecting a mobile station that requires operation mode switching in a multi-band system utilizing at least two frequency bands having different bandwidths.

In order to accomplish the above, there is provided a method for switching a current duplexing mode of a mobile station in a cellular system in which at least one base station supports multiple duplexing modes. The method includes the steps of: determining if it is necessary to switch the current duplexing mode of the mobile station in a predetermined scheduling period; and switching the current duplexing mode of the mobile station when there are available wireless resources for a target duplexing mode into which the mobile station wants to switch the current duplexing mode.

In accordance with another aspect of the present invention, there is provided a method for switching a current frequency band of a mobile station in a cellular system in which at least one base station supports both a wideband and a narrowband. The method includes the steps of: determining if it is necessary to switch the current frequency band of the mobile station in a predetermined scheduling period; and switching the current frequency band of the mobile station when there exist available wireless resources for a target frequency band into which the mobile station wants to switch the current frequency band.

In accordance with another aspect of the present invention, there is provided a cellular system including: a mobile station for transmitting duplexing mode switching request information when it is necessary to switch a current duplexing mode of the mobile station; and a base station for determining, based on the duplexing mode switching request information from the mobile station, if it is necessary to switch the current duplexing mode of the mobile station, and commanding the mobile station to switch the current duplexing mode when there are available wireless resources for a target duplexing mode into which the mobile station wants to switch the current duplexing mode.

The present invention will be more apparent from the following detailed description taken in conjunction with the accompanying drawings, in which:
FIG. 1 illustrates a conventional HD system, which supports an FDD mode and a TDD mode;
FIG. 2 illustrates an example of mode switching by a base station in a cell supporting a TDD mode and an FDD mode;
FIG. 3 is a graph illustrating mode switching between a TDD mode and an FDD mode;
FIG. 4 illustrates examples of movement of mobile stations that may require mode switching in an HD system supporting both the FDD mode and the TDD mode;
FIG. 5 illustrates state transition of a mobile station by operation mode switching according to an embodiment of the present invention;
FIG. 6 illustrates a signaling process in a successful mode switching according to an embodiment of the present invention;
FIG. 7 illustrates a signaling process in a failed mode switching according to an embodiment of the present invention;
FIG. 8 illustrates a signaling process in a successful mode switching while waiting during a delay time according to an embodiment of the present invention;
FIG. 9 is a flowchart illustrating a control process for mode switching by a base station according to an embodiment of the present invention;
FIG. 10 is a flowchart illustrating a check list generation subroutine;
FIG. 11 is a flowchart illustrating a mode determination subroutine;
FIG. 12 is a flowchart illustrating a mode switching subroutine;
FIG. 13 is a flowchart illustrating a next scheduling mobile station selection subroutine;
FIG. 14 illustrates a state transition based on the process illustrated in FIG. 10;
FIG. 15 illustrates an example of frequency band switching used in an uplink and a downlink;
FIG. 16 illustrates a signaling process in a successful frequency band switching according to an embodiment of the present invention;
FIG. 17 is a flowchart of a control process for frequency band switching according to an embodiment of the present invention;
FIG. 18 is a flowchart illustrating a check list generation subroutine;
FIG. 19 is a flowchart illustrating a frequency band determination subroutine;
FIG. 20 is a flowchart illustrating a frequency band switching subroutine;
FIG. 21 is a flowchart illustrating a control process for mode/band switching according to the third embodiment of the present invention;
FIG. 22 is a flowchart illustrating the priority grant subroutine; and
FIG. 23 is a flowchart illustrating a mode/band switching subroutine.

Hereinafter, preferred embodiments of the present invention will be described in detail with reference to the accompanying drawings. The following description is directed to representative examples necessary in order to achieve the above object and other aspects.

Additionally, the embodiments of the present invention described below include embodiments relating to schemes for operation mode switching and embodiments relating to schemes for frequency band switching.

In the following description, situations requiring switching of an operation mode of a mobile station are discussed, and operations for operation mode switching are then discussed in detail. The following description is focused on an HD system utilizing the TDD mode and FDD mode. However, it is obvious to those skilled in the art that the present invention can be applied to a system utilizing other modes.

Further, in the following description, situations requiring switching of a frequency band to be used by a mobile station are discussed, and operations for frequency band switching are then discussed in detail. The following description is focused on a multi-band system utilizing at least two frequency bands having different bandwidths. However, it is obvious to those skilled in the art that the present invention can be applied to a system utilizing other frequency bands.

### A. First Embodiment (Operation Mode Switching)

Hereinafter, switching an operation mode of a mobile station in an HD system utilizing both a TDD scheme and an FDD scheme according to an embodiment of the present invention will be described.

### A-1. Example Of Operation Mode Switching

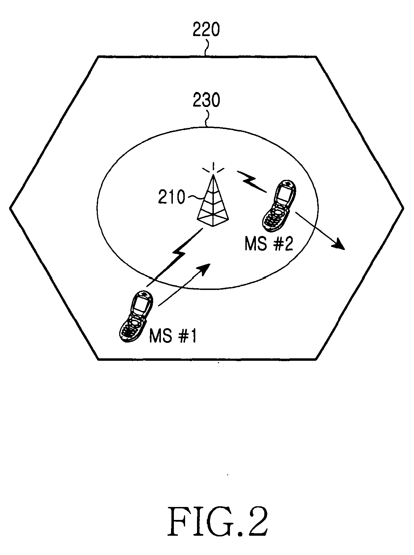

FIG. 2 illustrates an example of operation mode switching by a base station in a cell supporting a TDD mode and an FDD mode. More specifically, FIG. 2 illustrates a case in which a service area supporting the FDD mode includes a service area supporting the TDD mode. That is, referring to FIG. 2, the TDD service area 230, i.e., the shaded area, is located within the FDD service area 220, i.e., the non-shaded area.

Further, FIG. 2 is based on an assumption that the FDD mode is supported on an uplink and the TDD mode is supported on a downlink for the mobile stations belonging to the FDD service area 220. Also, it is assumed that the FDD mode is supported both on an uplink and a downlink for the mobile stations belonging to the TDD service area 230. That is, the operation mode switching refers to switching of an operation mode on the uplink.

Referring to FIG. 2, a base station 210 provides the TDD mode and the FDD mode. Therefore, the TDD service area 230 is a service area in which the base station 210 provides a service in the TDD mode. Of course, a service of the FDD mode can be supported for mobile stations within the TDD service area 230 when the mobile stations want to operate in the FDD mode. The FDD service area 220 is a service area in which the base station 210 provides a service in the FDD mode.

Usually, the TDD mode is more efficient than the FDD mode in supporting a service, e.g., a data service, requiring high speed. Therefore, the TDD service area 230 is located closer to the base station 210 than the FDD service area 220.

Further, FIG. 2 illustrates operation mode switching according to movement of the first mobile station (MS #1) and operation mode switching according to movement of the second mobile station (MS #2). The first mobile station (MS #1) located within the FDD service area 220 moves to the TDD service area 230. Then, the base station 210 detects the movement of the first mobile station (MS #1) and performs an operation mode switching process in order to switch the operation mode of the first mobile station (MS #1) from the FDD mode to the TDD mode. Further, the second mobile station (MS #2) located within the TDD service area 230 moves to the FDD service area 220. Then, the base station 210 detects the movement of the second mobile station (MS #2) and performs an operation mode switching process in order to switch the operation mode of the second mobile station (MS #2) from the TDD mode to the FDD mode.

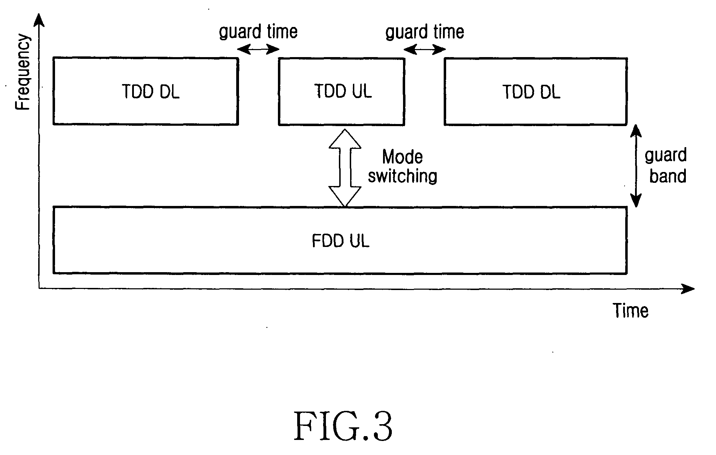

FIG. 3 is a graph illustrating an example of operation mode switching between the TDD mode and the FDD mode. Referring to FIG. 3, a guard band exists between the frequency band used for the TDD mode and the frequency band used for the FDD mode. The guard band prevents the TDD mode signal and the FDD mode signal from interfering with each other.

Further, in the TDD mode, a guard time exists between the downlink transmission interval (TDD DL) and the uplink transmission interval (TDD UL) on the time axis. The guard time is arranged in order to prevent interference between the uplink and the downlink of the TDD mode. The operation mode switching proposed by the present invention is switching of a used frequency band allocated for the uplink (TDD UL or FDD UL). That is, when a mobile station using the TDD mode has switched its operation mode, the mobile station uses the TDD mode without change for the downlink and uses the FDD mode changed only for the uplink. Meanwhile, when a mobile station using the FDD mode has switched its operation mode, the mobile station uses the FDD mode without change for the downlink and uses the TDD mode changed only for the uplink.

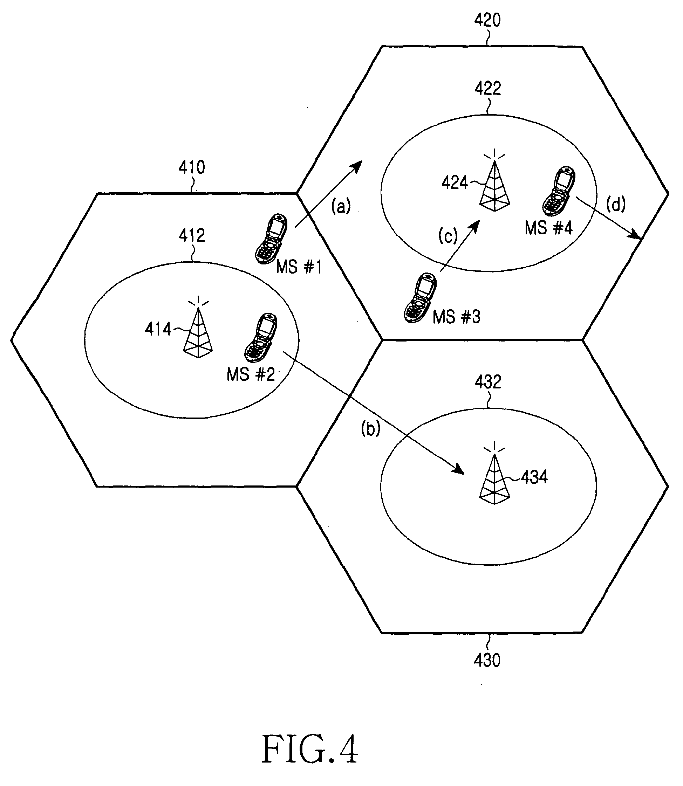

FIG. 4 illustrates examples of movement of mobile stations that may require mode switching in an HD system supporting both the FDD mode and the TDD mode. More specifically, FIG. 4 is based on an assumption that TDD mode service areas are located within FDD mode service areas.

In FIG. 4, reference numerals 410, 420, and 430 designate the FDD service areas in which service is provided in the FDD mode, and reference numerals 412, 422, and 432 designate the TDD service areas in which service is provided in the TDD mode. However, it is possible to use the FDD mode service even in the TDD service area. That is, the TDD service area supports both of the two different operation modes. Also, FIG. 4 is based on an assumption that each of the base stations 414, 424, and 434 can support both the FDD mode and the TDD mode.

Referring to FIG. 4, the switching of the operation mode can be classified into four types, i.e., switching from the FDD mode to the FDD mode, switching from the FDD mode to the TDD mode, switching from the TDD mode to the TDD mode, and switching from the TDD mode to the FDD mode. From among the four types of mode switching, mode switching into the same mode corresponds to switching when the mobile station moves between different service areas. Although not illustrated in FIG. 4, operation mode switching between the FDD mode and the TDD mode because of the movement of the mobile station between different cells can be performed.

The first mobile station (MS #1) performs mode switching from the FDD mode to the FDD, the second mobile station (MS #2) performs mode switching from the TDD mode to the TDD, the third mobile station (MS #3) performs mode switching from the FDD mode to the TDD, and the fourth mobile station (MS #4) performs mode switching from the TDD mode to the FDD.

The first mobile station (MS #1) using the FDD mode service within the first FDD service area 410 moves into the second FDD service area 420, as illustrated by arrow (a). Therefore, it is necessary to switch the operation mode of the first mobile station (MS #1), so that the second base station 424 can provide the FDD mode service which was provided by the first base station 414 before the mode switching.

The second mobile station (MS #2) using the TDD mode service within the first TDD service area 412 moves into the third TDD service area 432, as illustrated by arrow (b). Therefore, it is necessary to switch the operation mode of the second mobile station (MS #2), so that the third base station 434 can provide the TDD mode service, which was provided by the first base station 414 before the mode switching.

The third mobile station (MS #3) using the FDD mode service within the second FDD service area 420 moves into the second TDD service area 422, as illustrated by arrow (c). Therefore, it is necessary to switch the operation mode of the third mobile station (MS #3), so that the second base station 424 can provide the TDD mode service instead of the FDD mode service, which was provided by the second base station 424 before the mode switching.

The fourth mobile station (MS #4) using the TDD mode service within the second TDD service area 422 moves into the second FDD service area 420, as illustrated by arrow (d). Therefore, it is necessary to switch the operation mode of the fourth mobile station (MS #4), so that the second base station 424 can provide the FDD mode service instead of the TDD mode service that was provided by the second base station 424 before the mode switching.

### A-2. State Transition Of Mobile Station According To Operation Mode Switching

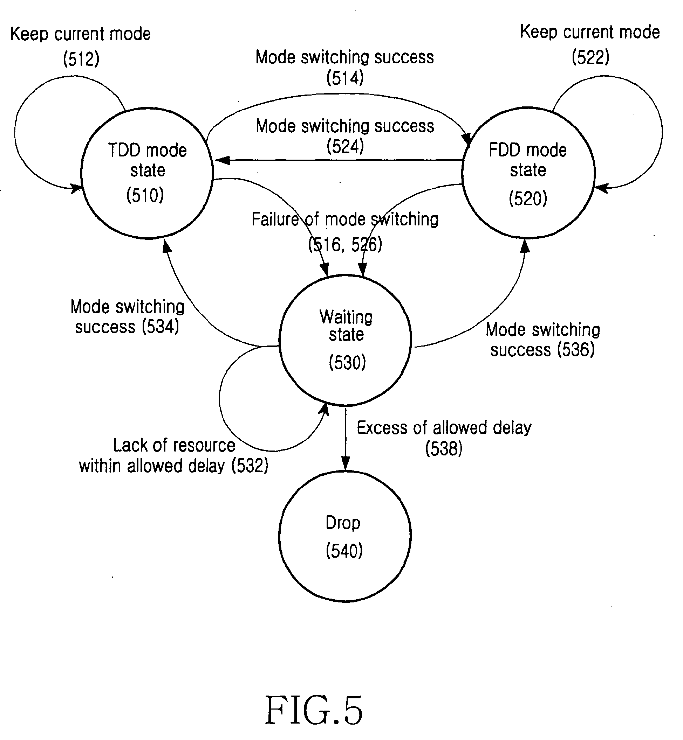

FIG. 5 illustrates state transition of a mobile station by operation mode switching according to an embodiment of the present invention. More specifically, FIG. 5 illustrates four states, i.e., a TDD mode state 510, an FDD mode state 520, a waiting state 530, and a drop state 540. In the TDD mode state, the mobile station uses the service in the TDD mode, and in the FDD mode state, the mobile station uses the service in the FDD mode. In the waiting state 530, the mobile station waits for switching of the operation mode during delay time due to shortage of resources, and in the drop state 540, the mobile station performs state transition, after passing the delay time in the waiting state 530.

Referring to FIG. 5, in the TDD mode state 510, there are three possible state transitions, i.e., a state transition 512 for keeping the current mode, a state transition 514 into the FDD mode 520, and a state transition 516 into the waiting state 530. The current mode is maintained by the state transition 512 corresponds to when there is no change in the operation mode from the result of a determination based on predetermined conditions. The state transition 514 into the FDD mode 520 corresponds to a case in which the mobile station successfully mode switched, and the state transition 516 into the waiting state 530 corresponds to a case in which the mobile station failed in the mode switching and waits for mode switching through allocation of resources in the next scheduling period. That is, when operation mode switching is unnecessary for a mobile station in the TDD mode state 510, the mobile station performs the state transition 512. However, when operation mode switching is necessary for a mobile station in the TDD mode state 510, the mobile station performs the state transition 514 or the state transition 516. A process for determining if an operation mode switching is necessary will be described later in more detail.

In the FDD mode state 520, there are three types of state transitions, i.e., a state transition 522 for keeping the current mode, a state transition 524 into the TDD mode 510, and a state transition 526 into the waiting state 530. The state transition 522 corresponds to when there is no change in the operation mode from the result of a determination based on predetermined conditions. The state transition 524 into the TDD mode 510 corresponds to a case in which the mobile station successfully mode switched, and the state transition 526 into the waiting state 530 corresponds to a case in which the mobile station failed in the mode switching. That is, when operation mode switching is unnecessary for a mobile station in the FDD mode state 520, the mobile station performs the state transition 522. However, when operation mode switching is necessary for a mobile station in the FDD mode state 520, the mobile station performs the state transition 524 or the state transition 526.

In waiting state 530, there are four possible state transitions, i.e., a state transition 532 for keeping the current mode, a state transition 534 into the TDD mode 510, a state transition 536 into the FDD mode 520, and a state transition 536 into the drop state 540. The current mode is maintained by the state transition 532 when allocated resources are insufficient or the allowed delay time has not passed yet. The state transition 534 into the TDD mode 510 corresponds to a case in which there are sufficient resources necessary for the mode switching into the TDD mode, and the state transition 536 into the FDD mode 520 corresponds to a case in which there are sufficient resources necessary for the mode switching into the FDD mode. The state transition 538 into the drop state 540 corresponds to a case in which there are insufficient resources necessary for the mode switching until the allowed delay time entirely passes. That is, the mobile station in the waiting state 530 waits for sufficient resources necessary for the mode switching, and terminates the mode switching when sufficient resources necessary for the mode switching are not generated during the allowed delay time.

In order to state transition as illustrated in FIG. 5, it is necessary to present specific standards for execution of operation mode switching in each operation mode. Also, it is necessary to present a specific process for operation mode switching, which satisfies the standards. Such standards and a process based on the same will be described in detail hereinafter.

### A-3. Signaling According To Operation Mode Switching

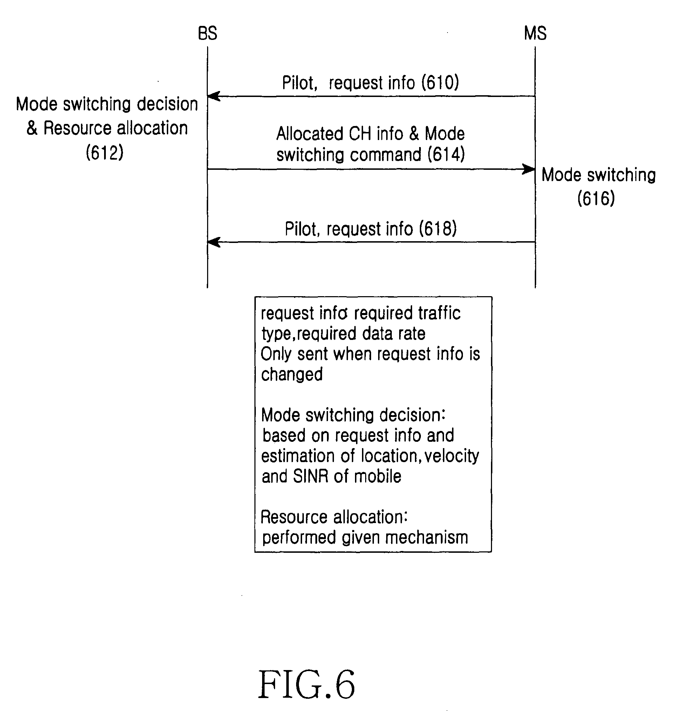

FIG. 6 illustrates a signaling process in a successful mode switching according to an embodiment of the present invention. Referring to FIG. 6, a mobile station transmits an intensity of a received pilot signal measured by the mobile station with request information to a base station in step 610. The request information includes a required traffic type and a required data rate. The request information is transmitted only when mode switching is performed.

Based on the reception intensity of the pilot signal and the request information, the base station determines whether to allow execution of mode switching of the mobile station. In order to determine whether to allow execution of the mode switching, the base station measures a location, a velocity, and a Signal to Interference Noise Ratio (SINR). When the base station determines to allow execution of the mode switching, the base station allocates resources necessary for the mode switching in step 612. Then, in step 614, the base station transmits allocated channel information and mode switching command to the mobile station.

Upon receiving the mode switching command, the mobile station performs the mode switching based on the allocated channel information in step 616. In step 618, the mobile station transmits the reception intensity of the pilot signal and the request information to the base station at a predetermined period.

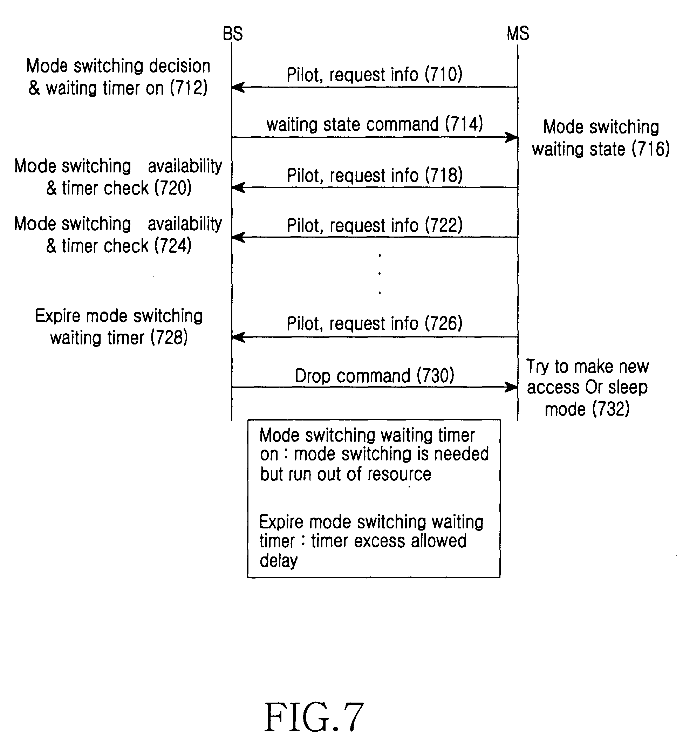

FIG. 7 illustrates a signaling process in a failed mode switching according to an embodiment of the present invention. Referring to FIG. 7, a mobile station transmits an intensity of a received pilot signal measured by the mobile station together with request information to a base station in step 710. The request information includes a required traffic type and a required data rate. The request information is transmitted only when mode switching is performed.

Based on the reception intensity of the pilot signal and the request information, the base station determines whether to allow execution of mode switching of the mobile station. In order to determine whether to allow execution of the mode switching, the base station measures a location, a velocity, and an SINR. When the base station determines to allow execution of the mode switching, the base station allocates resources necessary for the mode switching. However, step 712 is based on an assumption that there are insufficient resources for the mode switching. In this situation, the base station operates a waiting timer, which is used in order to check if an extra resource occurs before a predetermined delay time passes. In step 714, the base station issues a waiting state command which orders the mobile station to transit into the waiting state.

Upon receiving the waiting state command, the mobile state performs mode switching into the waiting state in step 716. Then, the mobile station transmits the reception intensity of the pilot signal and the request information to the base station at a predetermined period in steps 718, 722, and 726.

The base station receives the reception intensity of the pilot signal and the request information periodically transmitted from the mobile station. Whenever receiving the reception intensity of the pilot signal and the request information, the base station checks the waiting timer and checks if the mode switching is still available. Steps 720 and 724 correspond to a case in which the mode switching is still available and the predetermined delay time has not passed yet. However, in step 728, the base station confirms that the waiting timer for checking the delay for mode switching has expired. After confirming the expiration of the waiting timer, the base station issues a drop command, which orders drop of the mode switching, in step 730.

Upon receiving the drop command, the mobile station tries a new connection to the base station or switches into the sleep mode in step 732.

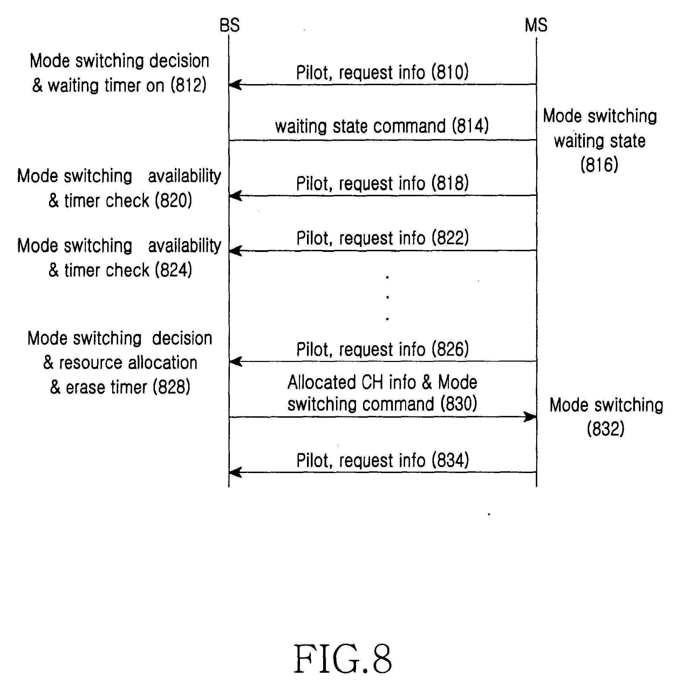

FIG. 8 illustrates a signaling process in a successful mode switching while waiting during a delay time according to an embodiment of the present invention. Referring to FIG. 8, a mobile station transmits an intensity of a received pilot signal measured by the mobile station with request information to a base station in step 810. The request information includes a required traffic type and a required data rate. The request information is transmitted only when mode switching is performed.

Based on the reception intensity of the pilot signal and the request information, the base station determines whether to allow execution of mode switching of the mobile station. In order to determine whether to allow execution of the mode switching, the base station measures a location, a velocity and an SINR. When the base station determines to allow execution of the mode switching, the base station allocates resources necessary for the mode switching. However, step 812 is based on an assumption that there are insufficient resources for the mode switching. In this situation, the base station operates a waiting timer to check if an extra resource occurs before a predetermined delay time passes. In step 814, the base station issues a waiting state command which orders the mobile station to transit into the waiting state.

Upon receiving the waiting state command, the mobile state performs mode switching into the waiting state in step 816. Thereafter, the mobile station transmits the reception intensity of the pilot signal and the request information to the base station at a predetermined period in steps 818, 822, and 826.

The base station receives the reception intensity of the pilot signal and the request information periodically transmitted from the mobile station. Whenever receiving the reception intensity of the pilot signal and the request information, the base station checks the waiting timer and checks if the mode switching is still available. Steps 820 and 824 correspond to a case in which the mode switching is still available and the predetermined delay time has not passed yet. In step 828, the base station confirms that the mode switching is still available and available resources for the mode switching have occurred. Then, the base station allocates the occurred available resources for the mode switching and releases the waiting timer. In step 830, the base station transmits a mode switching command together with allocated channel information by the allocated resources to the mobile station.

Upon receiving the mode switching command, the mobile station performs the mode switching based on the allocated channel information in step 832. In step 834, the mobile station transmits the reception intensity of the pilot signal and the request information to the base station.

### A-4. Operation According To Operation Mode Switching

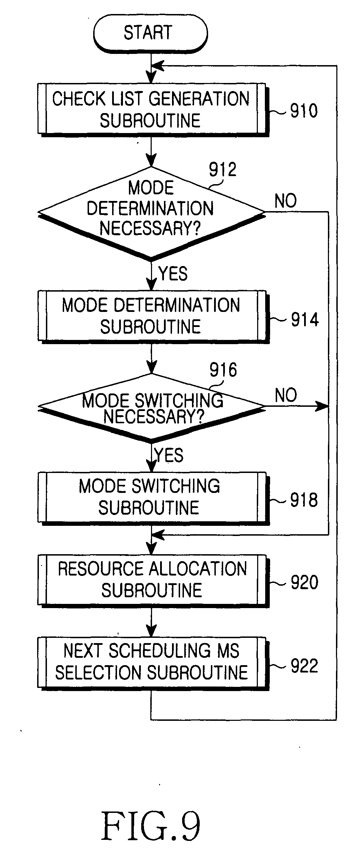

FIG. 9 is a flowchart of a control process for mode switching by a base station according to an embodiment of the present invention. More specifically, the process illustrated in FIG. 9 includes a subroutine for generating a check list and a subroutine for selecting a next scheduling mobile station. The check list generation subroutine is necessary in order to shorten the processing time by removing mobile stations having nearly no possibility of mode switching from the subjects of the checking. The next scheduling mobile station selection subroutine is necessary in order to reduce the number of signaling rounds between the mobile station and the base station by dropping mobile stations spending more time than a predetermined limit. However, according to other embodiments of the present invention, steps relating to the check list generation subroutine and the next scheduling mobile station selection subroutine may be omitted from the entire process.

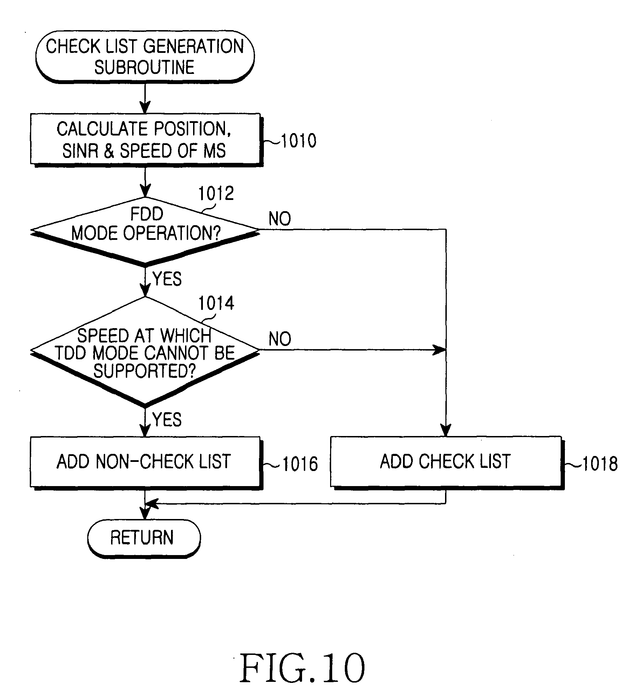

Referring to FIG. 9, a base station receives information about a requested data rate, a traffic type, and a reception intensity of a pilot signal from a mobile station. Thereafter, in step 910, the base station performs a subroutine for generating a check list for mobile stations requiring mode switching. The check list generation subroutine will be described in more detail later with reference to FIG. 10.

In step 912, the base station determines, based on the check list, if it is necessary to perform operation for mode switching. When it is unnecessary to perform operation for mode switching, the base station maintains the existing operation mode in step 920. The determination in step 912 shortens the processing time by removing mobile stations having almost no possibility of mode switching from the subjects of the checking.

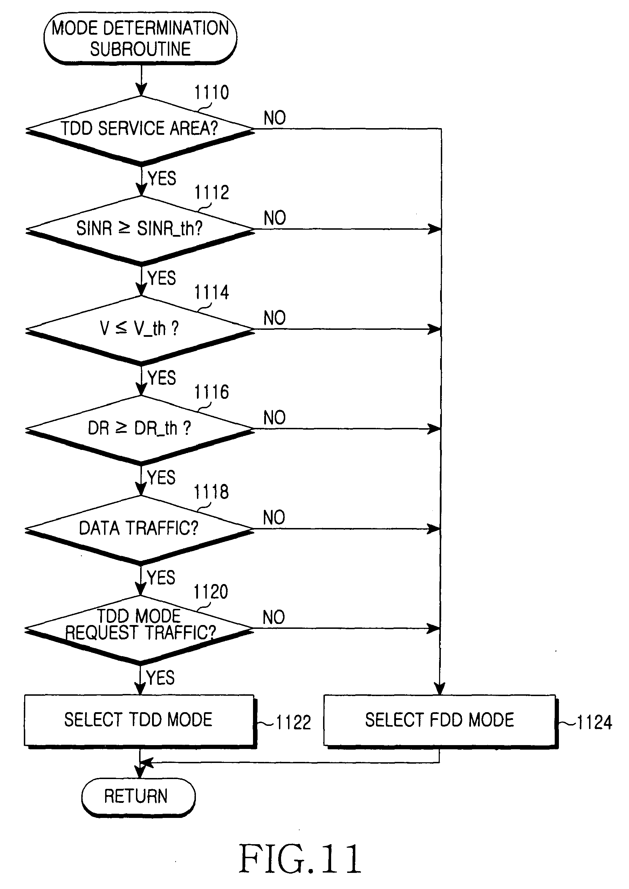

When it is necessary to perform operation for mode switching, the base station performs a mode determination subroutine for selecting a proper operation mode for the mobile station. The mode determination subroutine can be determined based on a location, an SINR, a velocity, a data rate of the mobile station in step 914. That is, the TDD mode is selected as an operation mode for only the mobile stations satisfying the conditions required for the TDD mode. The mode determination subroutine will be described in more detail with reference to FIG. 11.

When an operation of the mobile station is determined by the mode determination subroutine, the base station determines if mode switching is necessary for the mobile station in step 916). More specifically, in step 916, a determination is made of if the current operation mode of the mobile station coincides with the determined operation mode. When mode switching is necessary for the mobile station, the process proceeds to step 918. However, when mode switching is unnecessary for the mobile station, the process proceeds to step 920.

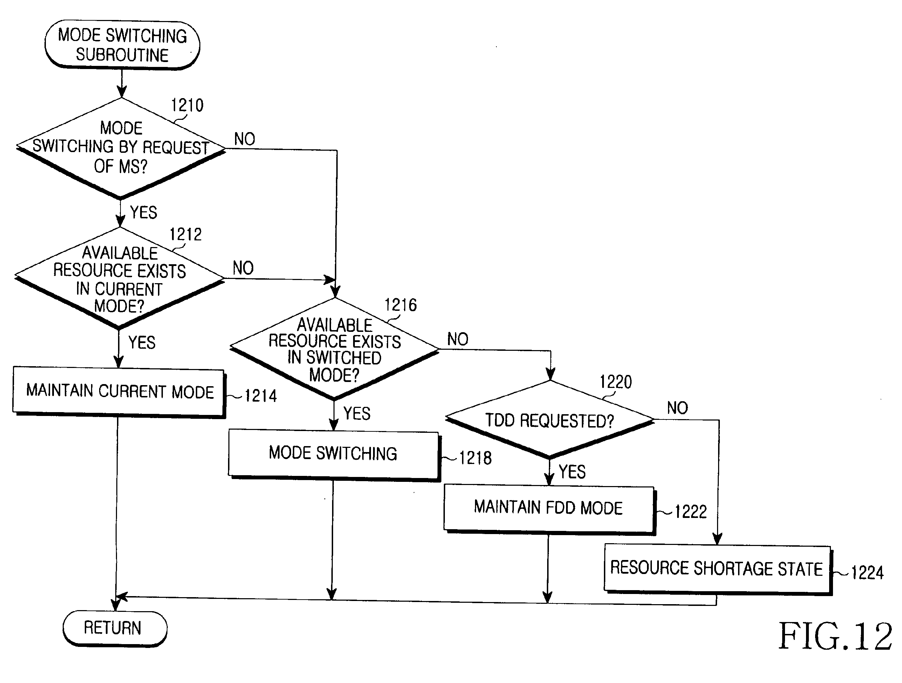

In step 918, the base station performs a mode switching subroutine that will be described in more detail later with reference to FIG. 12.

In step 918, the base station determines if it has sufficient resources for supporting the determined operation mode. That is, only when it is possible to allocate sufficient resources for performing the determined operation mode to the corresponding mobile station, the base station allows the operation mode switching.

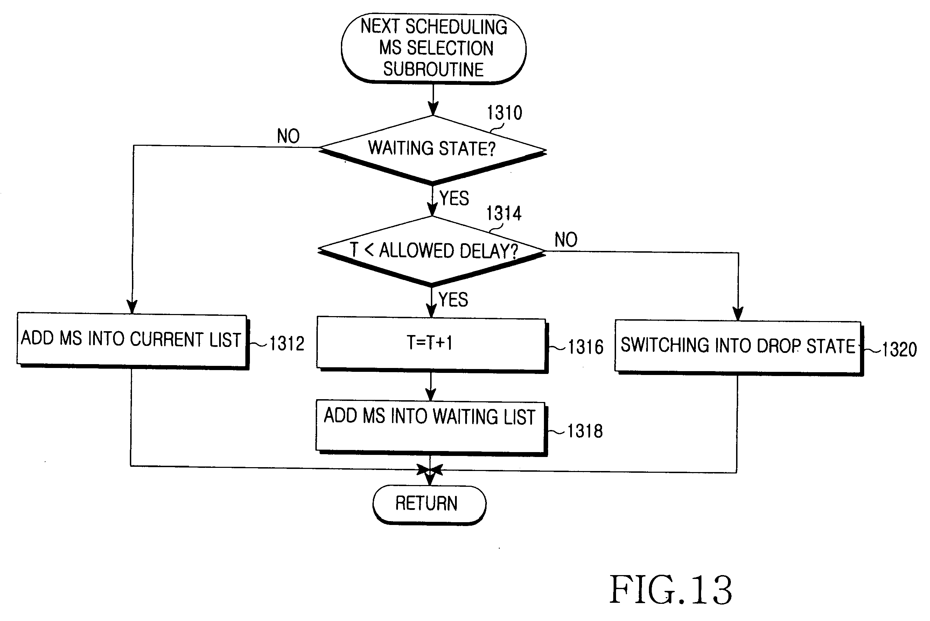

In step 920, the base station performs a resource allocation subroutine. When the resource allocation to the mobile station has been performed, the base station performs the next scheduling mobile station selection subroutine. The next scheduling mobile station selection subroutine determines whether to add mobile stations currently in the waiting state into a list of mobile stations for which next scheduling will be performed. By dropping the mobile stations that are currently in the waiting state but are not added into the list, it is possible to allocate new resources. The next scheduling mobile station selection subroutine employs a scheme which preliminarily drops mobile stations which are expected to spend more delay time than an allowed delay time in the next scheduling period, instead of dropping mobile stations spending more delay time than an allowed delay time in the current scheduling period. Therefore, the next scheduling mobile station selection subroutine can reduce the number of signaling rounds between the mobile station and the base station. The next scheduling mobile station selection subroutine will be described later in more detail with reference to FIG. 13.

At the next scheduling, the base station repeatedly performs the above-described mode switching operation for the selected mobile station.

Additionally, the base station may perform a priority grant subroutine before performing the mode switching subroutine. The priority grant subroutine compares a total bandwidth necessary for each operation mode with an available bandwidth, and provides a priority to premium users for the mode switching when the bandwidth is insufficient. When the priority grant subroutine is added in the process, the mode switching subroutine is applied only to the mobile stations that are subjects of the mode switching. For other mobile stations for the next scheduling, the next scheduling mobile station selection subroutine in step 922 is performed. Also, for the mobile stations that are not the subjects of the mode switching, the resource allocation subroutine is performed in step 920.

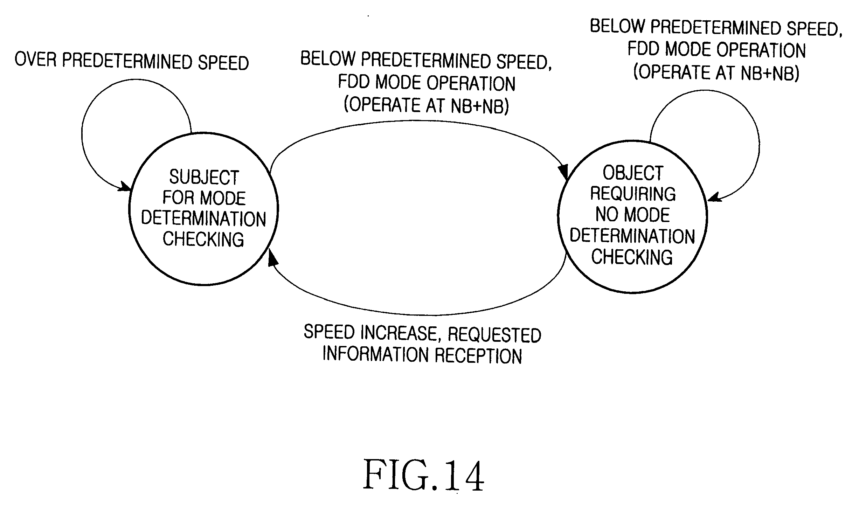

FIG. 10 is a flowchart of a check list generation subroutine. More specifically, the process illustrated in FIG. 10 is based on the state transition illustrated in FIG. 14.

Referring to FIG. 14, only the mobile stations having velocities, which are calculated to be faster than a predetermined velocity, are determined as subjects of checking for mode switching. When a velocity of a mobile station, which is a subject of the checking for mode switching, decreases below the predetermined velocity, the mobile station is changed to a subject of non-checking. The mobile station changed to a subject of non-checking can operate in the FDD mode.

When the velocity of the mobile station changed to a subject of non-checking is maintained below the predetermined velocity, the mobile station keeps operating in the FDD mode. Otherwise, when the velocity of the mobile station changed to a subject of non-checking increases and the request information is received, the mobile station is changed again to a subject of the checking for mode switching.

Referring to FIG. 10, the base station calculates the location, SINR, and velocity of the mobile station in step 1010. In step 1012, the base station determines if the current operation mode of the mobile station is the FDD mode. When the current operation mode of the mobile station is not the FDD mode, the process proceeds to step 1018. However, when the current operation mode of the mobile station is the FDD mode, the base station determines if the calculated velocity of the mobile station is a velocity at which the TDD mode cannot be supported in step 1014. When the calculated velocity of the mobile station is a velocity at which the TDD mode can be supported, the base station adds the mobile station into the check list in step 1018, so that a mode determination for the mobile station can be performed.

However, when the calculated velocity of the mobile station is a velocity at which the TDD mode cannot be supported, the base station adds the mobile station into a non-check list in step 1016, so that a mode determination for the mobile station is not performed.

FIG. 11 is a flowchart of a mode determination subroutine. In order to determine an operation mode of a mobile station according to the subroutine shown in FIG. 11, it is necessary to arrange standards for distinguishing between the FDD mode and the TDD mode. Table 1 shows standards by which it is possible to determine if an operation mode of a mobile station is a TDD mode or an FDD mode.

**Table 1**

| | TDD mode | FDD mode |
|---|---|---|
| Location | Inner side of the cell | All over the cell |
| Velocity | Low | High |
| data rate | High (Low data rate can be supported) | Low (High rate can be supported with CHs) |
| Traffic type | Data (Voice possible) | Voice (data possible) |
| Required SINR | High | Low |
| Required characteristics | Asymmetry Reciprocity | Simultaneous & continuous transmission |

Standards for each operation mode presented in Table 1 are arranged, and the operation mode of each mobile station is determined based on the arranged standards.

In the mode determination subroutine, operation modes of all the mobile stations are determined as soon as connection between the base station and the mobile stations is established. In the other cases, the operation mode determination is performed for only the mobile stations that are subjects of monitoring.

Referring to FIG. 11, the base station determines if the mobile station is located within a TDD service area in step 1110. The TDD service area is located within the FDD service area. The determination can be performed based on the calculated location of the mobile station, which is described above with reference to FIG. 10.

When the mobile station is located within the TDD service area, the base station determines if the SINR of the mobile station is larger than or equal to a threshold SINR (SINR_th) in step 1112. The SINR of the mobile station has been already obtained in the way described with reference to FIG. 10. When the SINR of the mobile station is smaller than the threshold SINR, the base station proceeds to step 1124 in which the base station determines the operation mode of the mobile station to be the FDD mode. However, when the SINR of the mobile station is larger than or equal to the threshold SINR, the base station proceeds to step 1114.

In step 1114, the base station determines if the velocity of the mobile station is smaller than or equal to a threshold velocity (V_th). The velocity of the mobile station has been already obtained in the way described with reference to FIG. 10. When the velocity of the mobile station is larger than the threshold velocity, the base station proceeds to step 1124, in which the base station determines the operation mode of the mobile station to be the FDD mode. However, when the velocity of the mobile station is smaller than or equal to the threshold velocity, the base station proceeds to step 1116.

In step 1116, the base station determines if the data rate requested by the mobile station is larger than or equal to a threshold data rate (DR_th). The data rate is transmitted as request information from the mobile station. When the data rate requested by the mobile station is smaller than the threshold data rate, the base station proceeds to step 1124. However, when the data rate requested by the mobile station is larger than or equal to the threshold data rate, the base station proceeds to step 1118.

In step 1118, the base station determines if the service requested by the mobile station is a data traffic. When data traffic is not requested by the mobile station, the base station proceeds to step 1124. However, when data traffic is requested by the mobile station, the base station proceeds to step 1120.

In step 1120, the base station determines if the service requested by the mobile station has characteristics satisfying the characteristics of the TDD mode. For example, when the service requested by the mobile station has characteristics of asymmetry or reciprocity, it can be said that they satisfy the characteristics of the TDD mode. However, when the service requested by the mobile station has characteristics of continuous transmission, it can be said that they satisfy the characteristics of the FDD mode. When the service requested by the mobile station does not have the characteristics satisfying the characteristics of the TDD mode, the base station proceeds to step 1124. However, when the service requested by the mobile station has the characteristics satisfying the characteristics of the TDD mode, the base station proceeds to step 1122, in which the base station determines the operation mode of the mobile station to be the TDD mode.

As described above, the base station obtains various information about the mobile station and determines the operation mode of the mobile station based on the obtained information. The information to be obtained in order to determine the operation mode includes the location of the mobile station, SINR, velocity, data rate, traffic type, and required characteristics.

Various types of mode determination subroutines may be implemented according to the objects of the subroutines. For example, a mode determination subroutine that gives a priority to slowly moving mobile stations may be proposed in order to increase the quantity of processed data. Also, another mode determination subroutine that guarantees a minimum quality of service for rapidly moving mobile stations may be proposed in order to secure impartiality.

FIG. 12 is a flowchart of a mode switching subroutine. The mode switching subroutine is executed when the frequency band determination yields a conclusion that it is preferable to use another operation mode different from the current operation mode. When the mode switching is necessary due to change in the request of the mobile station, the current operation mode is maintained without change unless resources for the current operation mode is insufficient, in order to reduce the loads according to frequent mode switching on the mobile station and the base station. However, when the mode switching is necessary due to a reason other than the change in the request of the mobile station, the operation mode is switched only if there are resources for the operation mode to be switched. When there are insufficient resources for the operation mode to be switched, it is determined according to the requested operation mode whether to perform the mode switching or not. That is, when a mode switching from the TDD mode to the FDD mode is requested, which implies that it is impossible any more to use the service in the TDD mode, it is determined to use the service in the next scheduling period. However, when a mode switching from the FDD mode to the TDD mode is requested, it is determined to continue the use of the service in the FDD mode, because the FDD mode is the basic operation mode provided for all the mobile stations.

Referring to FIG. 12, the base station determines if the mode switching is necessary due to change in the request information transmitted from the mobile station in step 2110. When the mode switching is necessary due to change in the request information transmitted from the mobile station, the base station determines if there exist available resources for supporting the current mode in step 1212. When there exist available resources for supporting the current mode, the base station proceeds to step 1214, in which the base station maintains the current operation mode as the operation mode of the mobile station. That is, in step 1214, the base station does not perform mode switching for the mobile station.

When the reason for the mode switching is not a change in the request information transmitted from the mobile station or when there exist insufficient available resources for supporting the current mode, the base station proceeds to step 1216 in which the base station determines if there are sufficient available resources for supporting the operation mode into which the mobile station is expected to perform the mode switching. When there are sufficient available resources for supporting the operation mode into which the mobile station is expected to perform the mode switching, the base station switches the operation mode of the mobile station to the determined operation mode. However, when there are insufficient available resources for supporting the operation mode into which the mobile station is expected to perform the mode switching, the base station proceeds to step 1220.

In step 1220, the base station determines if the mobile station has requested mode switching into the TDD mode. When the mobile station has requested mode switching into the TDD mode, the base station proceeds to step 1222, in which the base station maintains the FDD mode without change. However, when the mobile station does not have requested mode switching into the TDD mode, the base station proceeds to step 1224, in which the base station commands the mobile station to transit into a resource shortage state. All of the mobile stations in the resource shortage state simultaneously perform mode transition into the waiting state when the shortage is settled.

FIG. 13 is a flowchart of a next scheduling mobile station selection subroutine. Referring to FIG. 13, the base station determines if the mobile station is currently in the waiting state in step 1310. When the mobile station is not in the waiting state, the base station adds the mobile station into the current check list in step 1312.

However, when the mobile station is currently in the waiting state, the base station determines if the time measured by the waiting timer exceeds the allowed delay time in step 1314. The waiting timer is used in order to measure the time period, which has passed after the mobile station transits into the waiting state. Therefore, the time measured by the waiting timer implies the time period, which has passed after the mobile station transits into the waiting state.

When the time measured by the waiting timer does not exceed the allowed delay time, the base station adds "1" to the measured time T in step 1316, and then adds the mobile station into the waiting list in step 1318. When the time measured by the waiting timer exceeds the allowed delay time, the base station proceeds to step 1320, in which the base station issues a mode switching command which commands the mobile station to transit into the drop state. After receiving the mode switching command, the mobile station must try new connection.

In the next scheduling mobile station selection subroutine as described above, when the base station issued the mode switching command to a mobile station but has insufficient resources, the base station determines the mobile station as a subject to which a service must be provided in a next scheduling period. When the time delay exceeds an allowed time delay in the next scheduling period, the mobile station is dropped. However, when the time delay does not exceed the allowed time delay in the next scheduling period, the mobile station is registered in a queue so that the mobile station can use the service in the next scheduling period. That is, instead of determining whether to drop the mobile station or not by checking the time delay in a corresponding scheduling period when the scheduling period starts, the determination of dropping is performed by checking the time delay in the next scheduling period when a corresponding scheduling period terminates, in order to reduce the number of signaling rounds between the mobile station and the base station. Further, it is possible to spare as much capacity of the buffer of the base station.

### B. Second Embodiment (Frequency band Switching)

Hereinafter, a process for switching a frequency band of a mobile station in a multi-band system utilizing at least two bands having different bandwidths according to an embodiment of the present invention will be described.

### B-1. Example Of Frequency band Switching

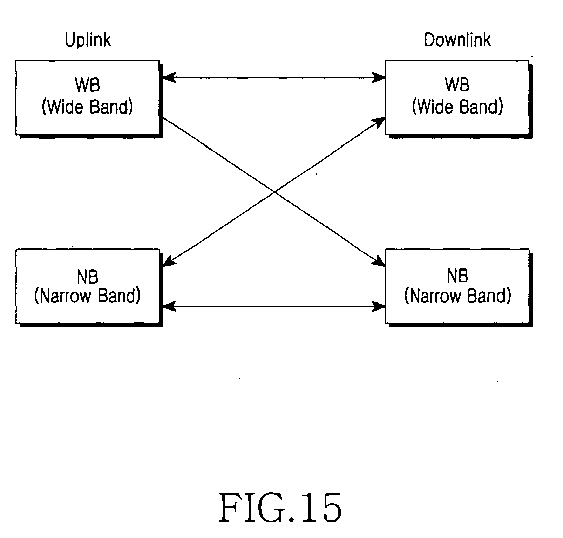

FIG. 15 illustrates an example of frequency band switching used in an uplink and a downlink. The system illustrated in FIG. 15 includes a wideband and a narrow band.

Referring to FIG. 15, four examples of downlink and uplink frequency allocation are available, i.e., allocation of a wideband frequency band to both the downlink and the uplink (1^{st} frequency allocation example), allocation of a narrowband frequency band to both the downlink and the uplink (2^{nd} frequency allocation example), allocation of a wideband frequency band to the downlink and a narrowband frequency band to the uplink (3^{rd} frequency allocation example), and allocation of a narrowband frequency band to the downlink and a wideband frequency band to the uplink (3^{rd} frequency allocation example).

The frequency band switching of a mobile station discussed below corresponds to switching between the four examples. For example, a mobile station, to which the 1^{st} frequency allocation example is applied, may be switched into the case of the 2^{nd} frequency allocation example, or a mobile station, to which the 4^{th} frequency allocation example is applied, may be switched into the case of the 1^{st} frequency allocation example.

### B-2. Signaling According To Frequency band Switching

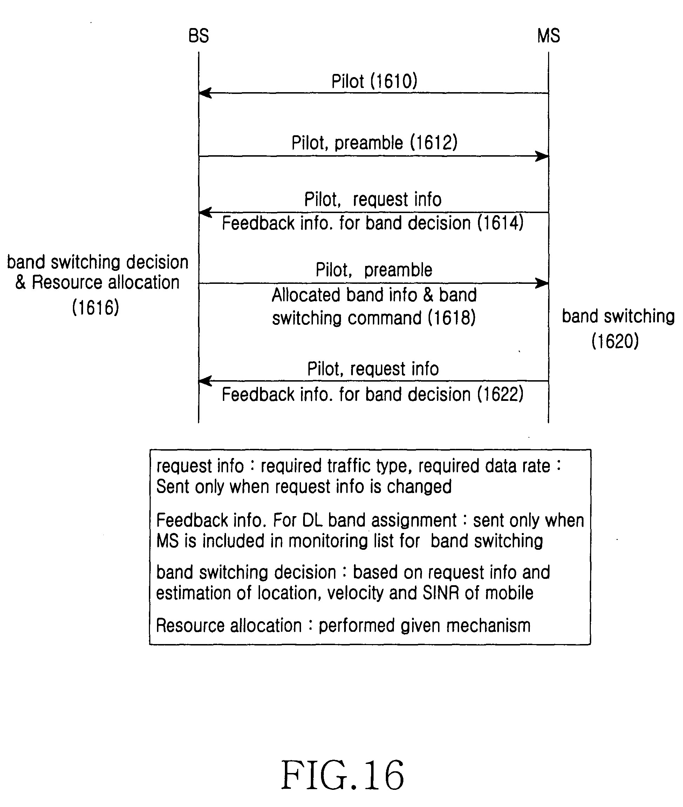

FIG. 16 illustrates a signaling process in a successful frequency band switching according to an embodiment of the present invention. Referring to FIG. 16, a mobile station transmits a pilot signal to a base station in step 1610. In step 1612, the base station transmits a preamble together with a pilot signal to the mobile station. In this case, it is assumed that a frequency band from among the wideband and the narrowband is provided as a basic operation band. In step 1614, the mobile station transmits request information and feedback information for downlink band decision to the base station. The request information is transmitted only when there is a change in the information. The request information includes a required traffic type and a required data rate.

Based on the request information, together with the location, velocity, and SINR of the mobile station, the base station determines whether to allow execution of frequency band switching of the mobile station. When the base station determines to allow execution of the frequency band switching, the base station allocates resources necessary for the frequency band switching in step 1616. In step 1618, the base station transmits the pilot signal, preamble, allocated frequency band information, and frequency band switching command to the mobile station.

Upon receiving the frequency band switching command, the mobile station performs the frequency band switching based on the allocated frequency band information in step 1620. In step 1622, the mobile station transmits the pilot signal at a predetermined period, and transmits the request information to the base station whenever it changes.

### B-3. Operation According To Frequency band Switching

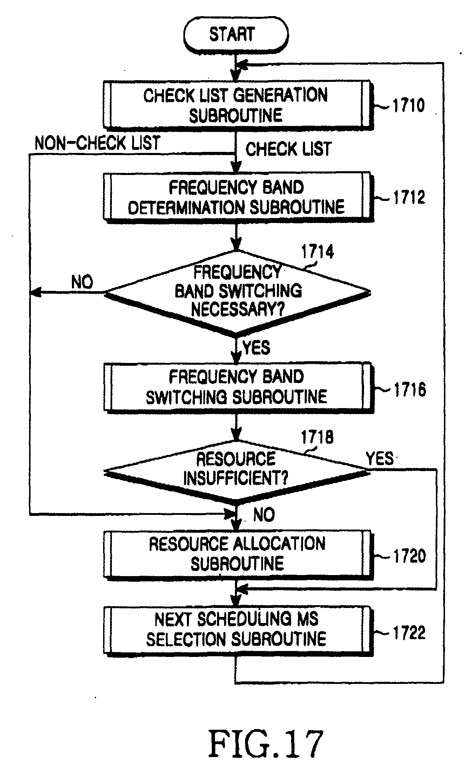

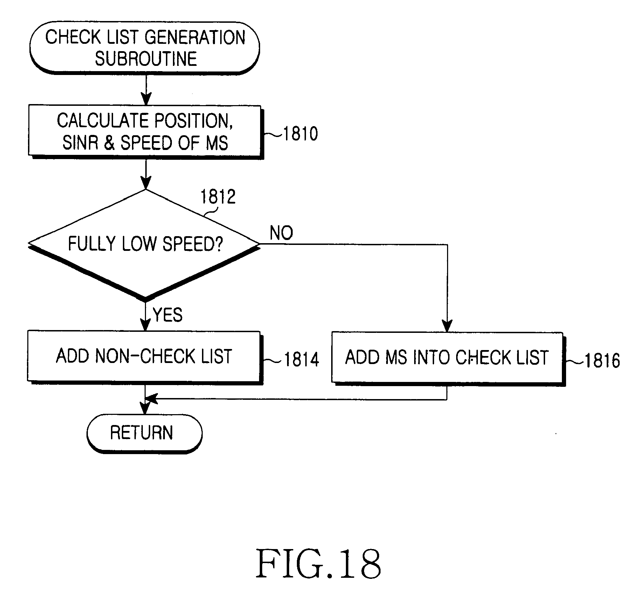

FIG. 17 is a flowchart of a control process for frequency band switching according to an embodiment of the present invention. Referring to FIG. 17, a base station receives information about a requested data rate, a traffic type, and a reception intensity of a pilot signal from a mobile station. In step 1710, the base station performs a check list generation subroutine for generating a check list for mobile stations requiring frequency band switching. A process for generating a check list includes calculation of a location, an SINR, and a velocity of a corresponding mobile station. Only mobile stations having a velocity over a predetermined threshold velocity are added in the check list, while the other mobile stations having a velocity below the predetermined threshold velocity are added in a non-check list, which is separately managed. The check list generation subroutine will be described in more detail with reference to FIG. 18.

In step 1712, with reference to the check list, the base station performs a frequency band determination subroutine for determining a proper frequency band for the mobile station. However, when a mobile station is added in the non-check list, the base station performs an operation for resource allocation, in order to shorten the processing time by preliminarily eliminating mobile stations having nearly no possibility of frequency band switching from the subjects for monitoring in step 1720.

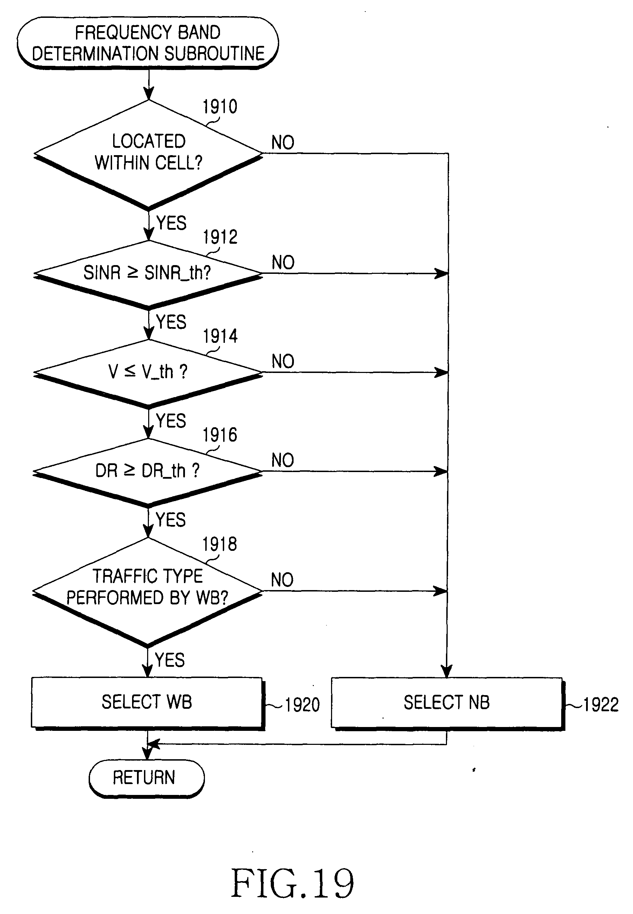

In step 1712, the base station performs a frequency band determination subroutine for determining a proper frequency band for the mobile station. The frequency band determination subroutine can be determined based on a location, an SINR, a velocity, and a data rate of the mobile station. That is, the wideband is selected as a frequency band for only the mobile stations satisfying the conditions required for the Wideband. The frequency band determination subroutine will be described in more detail with reference to FIG. 19.

When an operation of the mobile station is determined by the frequency band determination subroutine, the base station determines if frequency band switching is necessary for the mobile station in step 1714. More specifically, in step 1714, the determination that frequency band switching is necessary is performed by determining if the current frequency band of the mobile station coincides with the determined frequency band. When frequency band switching is necessary for the mobile station, the base station proceeds to step 1716. However, when frequency band switching is unnecessary for the mobile station, the base station proceeds to step 1720.

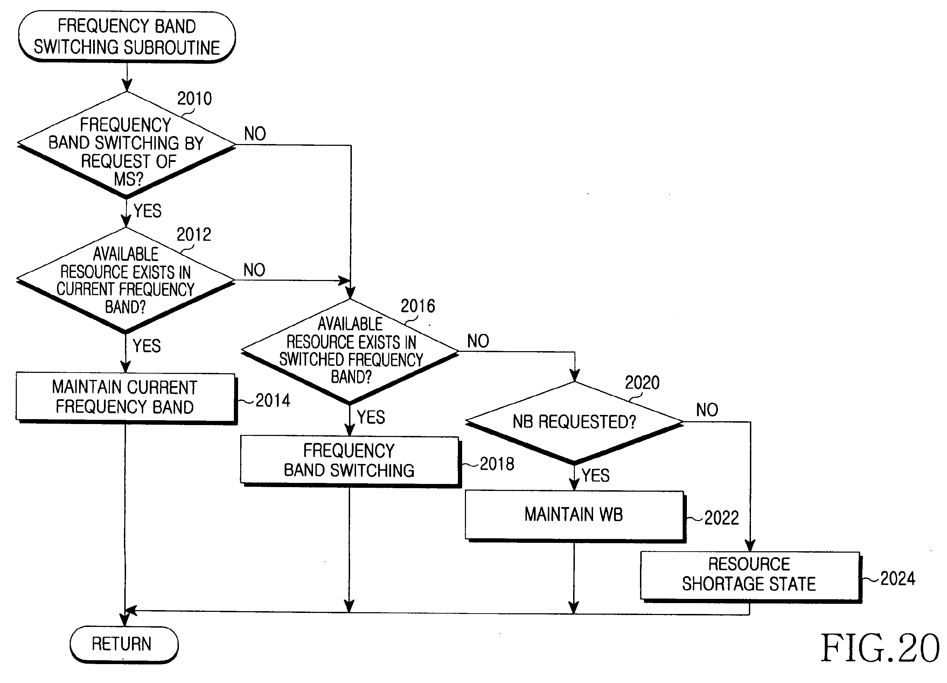

In step 1716, the base station performs a frequency band switching subroutine, which will be described in more detail later with reference to FIG. 20.

In step 1718, the base station determines if it has sufficient resources for supporting the determined frequency band. That is, only when it is possible to allocate sufficient resources for the mobile station using the determined frequency band, the base station allows the frequency band switching.

In step 1720, the base station performs a resource allocation subroutine. When the resource allocation to the mobile station has been performed, the base station performs the next scheduling mobile station selection subroutine. The next scheduling mobile station selection subroutine determines whether to add mobile stations currently in the waiting state into a list of mobile stations for which next scheduling will be performed. By dropping the mobile stations, which are currently in the waiting state but are not added into the list, it is possible to allocate new resources. The next scheduling mobile station selection subroutine uses a scheme that preliminarily drops mobile stations that are expected to spend more delay time than an allowed delay time in the next scheduling period, instead of dropping mobile stations spending more delay time than an allowed delay time in the current scheduling period. Therefore, the next scheduling mobile station selection subroutine can reduce the number of signaling rounds between the mobile station and the base station. The next scheduling mobile station selection subroutine may be the same as that described in the first embodiment.

In the present embodiment, the check list generation subroutine and the next scheduling mobile station selection subroutine may be omitted.

FIG. 18 is a flowchart illustrating a check list generation subroutine. The process illustrated in FIG. 18 is based on the state transition shown in FIG. 14.

Referring to FIG. 14, only the mobile stations having velocities, which are calculated to be faster than a predetermined velocity, are determined as subjects of checking for frequency band switching. When a velocity of a mobile station, which is a subject of the checking for frequency band switching, decreases below the predetermined velocity, the mobile station is changed to a subject of non-checking. The mobile station changed to a subject of non-checking is not subjected to the checking for frequency band switching.

When the velocity of the mobile station changed to a subject of non-checking is maintained below the predetermined velocity, the mobile station keeps being managed as a subject of non-checking. Otherwise, when the velocity of the mobile station changed to a subject of non-checking increases and the request information changes, the mobile station is changed again to a subject of the checking for frequency band switching.

Referring to FIG. 18, the base station calculates the location, SINR, and velocity of the mobile station in step 1810. In step 1812, the base station determines if the calculated velocity of the mobile station is slow enough to manage the mobile station as a subject of non-checking. When it is determined that the calculated velocity of the mobile station is not sufficiently slow, the base station adds the mobile station into the check list in step 1816. However, when it is determined that the calculated velocity of the mobile station is sufficiently slow, the base station adds the mobile station into a non-check list, so that a frequency band determination for the mobile station is performed in step 1814.

FIG. 19 is a flowchart illustrating a frequency band determination subroutine. In order to determine a frequency band of a mobile station according to the subroutine illustrated in FIG. 19, it is necessary to arrange standards for distinguishing between the narrowband and the wideband. Table 2 illustrates standards by which it is possible to determine if a frequency band of a mobile station is a wideband or a narrowband.

**Table 2**

| | Wideband | Narrowband |
|---|---|---|
| Location | Inner side of the cell | All over the cell |
| Velocity | Slow | Fast |
| Data rate | High | Low |
| Traffic type | Real time game, FTP and etc | E-mail, SMS, voice service |
| Required SINR | High | Low |

Standards for each frequency band presented in Table 2 are arranged, and the frequency band of each mobile station is determined based on the arranged standards.

In the frequency band determination subroutine, frequency bands of all the mobile stations are determined as soon as connection between the base station and the mobile stations is established. In the other cases, the frequency band determination is performed for only the mobile stations, which are subjects of monitoring.

Referring to FIG. 19, the base station determines if the mobile station is located within a cell of the base station in step 1910. When the mobile station is located within a cell, it implies that the cell is located near to the base station and is in a good wireless channel environment. The determination can be performed based on the calculated location of the mobile station, which is described above with reference to FIG. 10.

When the mobile station is located within the cell, the base station determines if the SINR of the mobile station is larger than or equal to a threshold SINR (SINR_th) in step 1912. The SINR of the mobile station has been already obtained in the way described with reference to FIG. 10. When the SINR of the mobile station is larger than or equal to the threshold SINR, the base station proceeds to step 1914.

In step 1914, the base station determines if the velocity of the mobile station is smaller than or equal to a threshold velocity (V_th). The velocity of the mobile station has been already obtained in the way described with reference to FIG. 10. When the velocity of the mobile station is smaller than or equal to the threshold velocity, the base station proceeds to step 1916.

In step 1916, the base station determines if the data rate requested by the mobile station is larger than or equal to a threshold data rate (DR_th). The data rate is transmitted as request information from the mobile station. When the data rate requested by the mobile station is larger than or equal to the threshold data rate, the base station proceeds to step 1918.

In step 1918, the base station determines if the service requested by the mobile station is a data traffic. When the mobile station requests data traffic, the base station proceeds to step 1920. In step 1920, the base station determines the frequency band of the mobile station to be the wideband. However, when "No" is an answer in any of the determinations in steps from 1910 through 1918, the base station determines the frequency band of the mobile station to be the narrowband in step 1922.

As described above, the base station obtains various information about the mobile station and determines the frequency band of the mobile station based on the obtained information. The information to be obtained in order to determine the frequency band includes the location of the mobile station, SINR, velocity, data rate, traffic type, and required characteristics.

Various types of frequency band determination subroutines may be implemented according to the objects of the subroutines. For example, a frequency band determination subroutine that gives a priority to slowly moving mobile stations may be proposed in order to increase the quantity of processed data. Another frequency band determination subroutine which guarantees a minimum quality of service for rapidly moving mobile stations may be proposed in order to secure impartiality.

FIG. 20 is a flowchart illustrating a frequency band switching subroutine. The frequency band switching subroutine is executed when the frequency band determination yields a conclusion that it is preferable to use another frequency band different from the current frequency band. When the frequency band switching is necessary due to change in the request of the mobile station, the current frequency band is maintained without change unless resources for the current frequency band is insufficient, in order to reduce the loads according to frequent frequency band switching on the mobile station and the base station. However, when the frequency band switching is necessary because of another reason other than the change in the request of the mobile station, the frequency band is switched only if there are resources for the frequency band to be switched. When there are insufficient resources for the frequency band to be switched, it is determined according to the requested frequency band whether to perform the frequency band switching.

FIG. 20 corresponds to the case where the narrowband is provided as the basic frequency band for all the mobile stations. That is, when a band switching from the wideband to the narrowband is requested, which implies that it is impossible any more to use the service in the wideband, it is determined to use the service in the next scheduling period. However, when a mode switching from the narrowband to the wideband is requested, it is determined to continue the use of the service in the narrowband, which is the basic frequency band.

However, the wideband may also be provided as the basic frequency band for all the mobile stations. In this case, when a band switching from the narrowband to the wideband is requested, which implies that it is impossible any more to use the service in the narrowband, it is determined to use the service in the next scheduling period. However, when the wideband is requested as the basic frequency band, it is determined to continue the use of the service in the broadband, which is the basic frequency band.

Referring to FIG. 20, the base station determines if the frequency band switching is necessary due to change in the request information transmitted from the mobile station in step 2010. When the frequency band switching is necessary due to change in the request information transmitted from the mobile station, the base station determines if there are available resources for supporting the current frequency band in step 2012. When there are available resources for supporting the current frequency band, the base station proceeds to step 2014, in which the base station keeps the current frequency band as the frequency band of the mobile station. That is, in step 2014, the base station does not perform frequency band switching for the mobile station.

When the reason for the frequency band switching is not a change in the request information transmitted from the mobile station or when there are insufficient available resources for supporting the current frequency band, the base station determines if there are sufficient available resources for supporting the frequency band into which the mobile station is expected to perform the frequency band switching in step 2016. When there are sufficient available resources for supporting the frequency band into which the mobile station is expected to perform the frequency band switching, the base station switches the frequency band of the mobile station to the determined frequency band in step 2018. However, when there are insufficient available resources for supporting the frequency band into which the mobile station is expected to perform the frequency band switching, the base station proceeds to step 2020.

In step 2020, the base station determines if the mobile station has requested frequency band switching into the narrowband. When the mobile station has requested frequency band switching into the narrowband, the base station proceeds to step 2022, in which the base station maintains the wideband as the frequency band of the mobile station. However, when mobile station has requested frequency band switching into the wideband, the base station proceeds to step 2024, in which the base station commands the mobile station to transit into a resource shortage state. All of the mobile stations in the resource shortage state will simultaneously perform frequency band transition into the waiting state when the shortage is settled.

### C. Third Embodiment

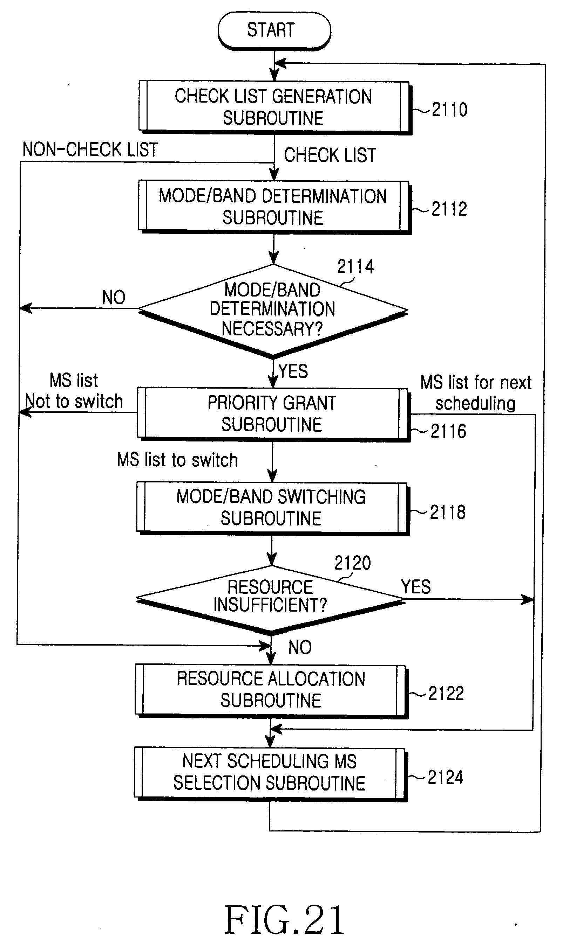

FIG. 21 is a flowchart illustrating a control process for mode/band switching according to a third embodiment of the present invention. More specifically, the process illustrated in FIG. 21 includes a priority grant subroutine (step 2116) before the mode/band switching subroutine (step 2118), in addition to the process according to the first or second embodiment. In the priority grant subroutine (step 2116), a total bandwidth necessary for each operation mode is compared with an available bandwidth, and a priority for the mode switching is given to premium users when the bandwidth is insufficient. When the priority grant subroutine (step 2116) is added in the process, the mode/band switching subroutine (step 2118) is applied only to the mobile stations that are subjects of the mode switching. Except for the two subroutines, the other steps illustrated in FIG. 21, i.e., 2110, 2112, 2114, 2120, 2122, and 2124, are the same as those in the process according to the first or second embodiment.

In the priority grant subroutine (step 2116), mode/band switching is performed according to the priority of each mobile station in consideration of an estimated available bandwidth and a total bandwidth necessary for each mode/band. Accordingly, mobile stations are classified according to their weights with a concept of admission control, and a priority for mode/band switching is given to premium users.

When there are sufficient resources for the premium users, the premium users are added into a list of subjects for mode/band switching. Further, by the priority given to the premium users, the resources are allocated to the premium users first. The mode/band switching of ordinary users is supported by using the remaining resources. Additionally, the other ordinary users, for whom mode/band switching cannot be supported due to shortage of the resources, are given an opportunity of performing the mode/band switching in the next scheduling period.

The application of the priority grant subroutine (step 2116) requires the band/mode switching subroutine (step 2118) to be different from that according to the first or second embodiment. More specifically, when there is sufficient bandwidth, the mode/band switching is performed for both the premium users and the ordinary users. However, when there is insufficient bandwidth, the mode/band switching is performed first for the premium users and then for the ordinary users by using the remaining bandwidths. When the remaining bandwidths are insufficient for mode/band switching of the ordinary users, the mode/band switching is determined according to the types of the mode/band requested by the users. That is, when the ordinary users have requested the FDD/NB, the mode/band switching is performed in the next scheduling period. However, when the ordinary users have requested the TDD/WB, the service by the TDD/WB keeps being provided.

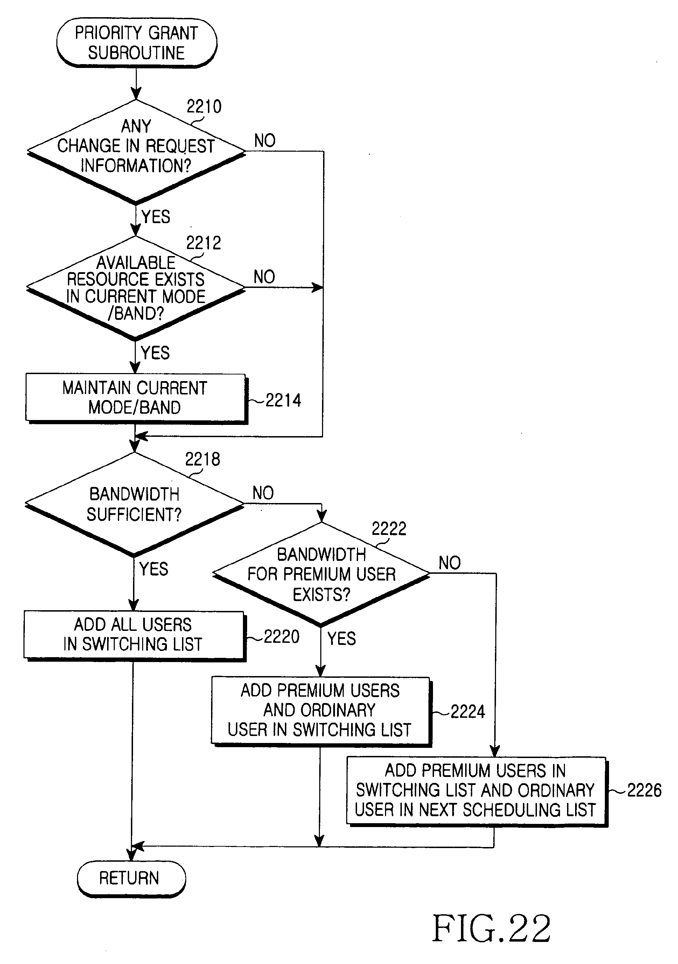

FIG. 22 is a flowchart illustrating the priority grant subroutine. Referring to FIG. 22, the base station determines if there is any change in the request information transmitted from the mobile station in step 2210. The base station proceeds to step 2212 when there is a change in the request information, and proceeds to step 2218 when there is no change in the request information. In step 2212, the base station determines if there are available resources in the current mode/band. The base station proceeds to step 2214 when there are available resources in the current mode/band, and proceeds to step 2218 when there are no available resources in the current mode/band.

In step 2214, the base station maintains the current frequency band as the frequency band of the mobile station. In step 2218, the base station determines if there is enough available bandwidth to satisfy the total bandwidth necessary for each mode/band. The determination in step 2218 can be achieved by comparing the total bandwidth necessary for each mode/band with the available bandwidth of each mode/band. When the total bandwidth necessary for each mode/band is smaller than or equal to the available bandwidth of each mode/band, it is can be said that there exists sufficient available bandwidth.

When the base station concludes that there is sufficient available bandwidth, the base station adds all the users in the switching list in step 2220. However, when the base station concludes that there is insufficient available bandwidth, the base station determines if there is bandwidth for premium users. The determination in step 2220 can be achieved by comparing the total bandwidth required by the premium users with the available bandwidth of each mode/band. When the total bandwidth required by the premium users is smaller than the available bandwidth of each mode/band, it is concluded said that there exists sufficient available bandwidth for the premium users.

When it is concluded said that there is sufficient available bandwidth for the premium users, the base station adds the premium users and ordinary users into the switching list in step 2224. However, when it is concluded that there is insufficient available bandwidth for the premium users, the base station proceeds to step 2226, in which the base station adds the premium users in the switching list in an order in which a premium user having the higher priority is added first, and the ordinary users are added after addition of all the premium users.

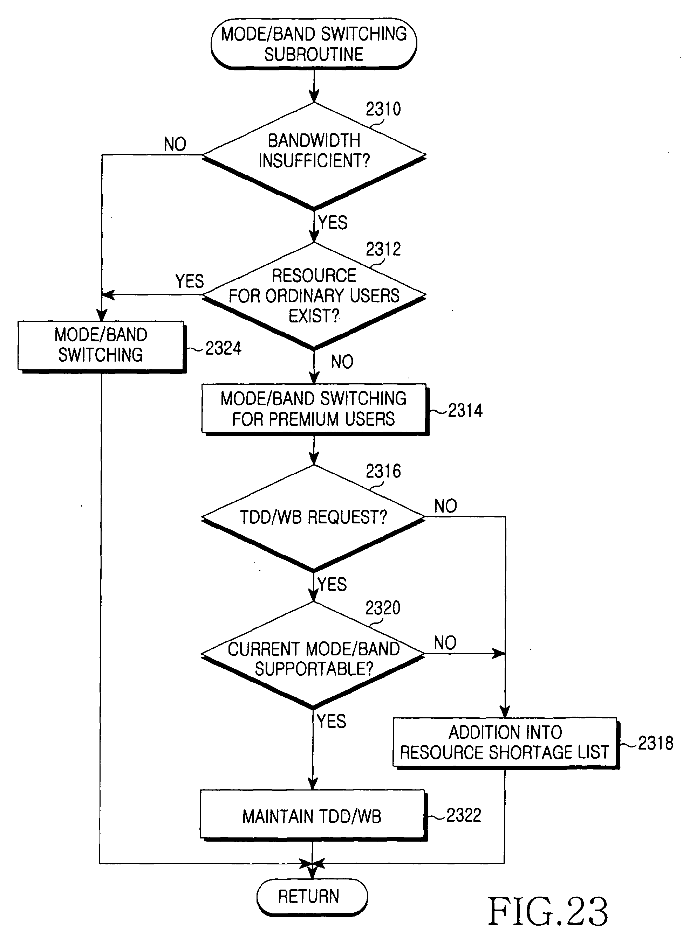

FIG. 23 is a flowchart illustrating a mode/band switching subroutine. In step 2310, the base station determines if the bandwidth for mode/band switching is insufficient. The determination in step 2310 can be achieved by comparing the total bandwidth necessary for each mode/band with the available bandwidth of each mode/band. When the total bandwidth necessary for each mode/band is larger than the available bandwidth of each mode/band, it is concluded that the bandwidth for mode/band switching is insufficient.

When it is concluded that the bandwidth for mode/band switching is sufficient, the base station performs mode/band switching for all users (mobile stations) regardless of the priority. However, when it is concluded that the bandwidth for mode/band switching is insufficient, the base station proceeds to step 2312, in which the base station determines if there are resources for ordinary users in addition to the resources necessary for mode/band switching of premium users. When there are sufficient resources for ordinary users in addition to the resources necessary for mode/band switching of premium users, the base station performs the mode/band switching for all the mobile stations regardless of the priority. However, when there are insufficient or no resources for ordinary users in addition to the resources necessary for mode/band switching of premium users, the base station performs the mode/band switching for only the premium users in step 2314.

In step 2316, the base station determines if the mode/band requested by each of the ordinary users is the TDD/WB. When the mode/band requested by each of the ordinary users is the FDD/NB instead of the TDD/WB, the base station adds the corresponding mobile station in the resource shortage list in step 2318. However, when the mode/band requested by each of the ordinary users is the TDD/WB, the base station determines if it is possible to support the current mode/band of the mobile user in step 2320. When it is possible to support the current mode/band of the mobile user, the base station maintains the TDD/WB for the ordinary users. However, when it is impossible to support the current mode/band of the mobile user, the base station adds the corresponding mobile station in the resource shortage list in step 2318.

The embodiment illustrated in FIG. 23 corresponds to where the FDD or NB is provided as a basic operation mode or band. When another type of mode or band is used as the basic operation mode or band, the embodiment also changes according to the basic mode or band.

According to the present invention described above, it is possible to switch an operation mode or a frequency band of a mobile station in a system employing different communication schemes. Therefore, the present invention can produce the following effects.

First, it is possible to provide a solution for constructing a next generation mobile communication network. Second, it is possible to improve the design level of communication system and support a service without intermittence. Third, it is possible to select a proper duplexing mode and a proper frequency band according to a request of a mobile station in consideration of the quality of service. Fourth, it is possible to provide priorities to mobile stations and allocate resources according to the priorities, thereby improving the service quality. Fifth, by the standards for determining a duplexing mode and a duplexing switching process arranged by the present invention, it is possible to switch a used duplexing mode in a system simultaneously supporting various duplexing modes in one base station. Also, by the standards for determining a duplexing mode and a duplexing switching process arranged by the present invention, it is possible to switch a used frequency band in a system simultaneously supporting various duplexing modes in one base station.

While the present invention has been shown and described with reference to certain preferred embodiments thereof, it will be understood by those skilled in the art that various changes in form and details may be made therein without departing from the scope of the invention as defined by the appended claims.

## Claims

1. A method for switching a current duplexing mode of a mobile station in a cellular system in which at least one base station supports multiple duplexing modes, the method comprising the steps of:
determining if it is necessary to switch the current duplexing mode of the mobile station in a predetermined scheduling period; and
switching the current duplexing mode of the mobile station when there are available wireless resources for a target duplexing mode into which the mobile station wants to switch the current duplexing mode.

2. The method as claimed in claim 1, wherein the base station supports a time division duplexing mode and a frequency division duplexing mode.

3. The method as claimed in claim 2, wherein the step of determining if it is necessary to switch the current duplexing mode comprises the steps of:
determining the time division duplexing mode as the target duplexing mode for a mobile station located within a service area using the time division duplexing mode;
determining the frequency division duplexing mode as the target duplexing mode when the mobile station is positioned out of the service area of the time division duplexing mode and within a service area using the frequency division duplexing mode; and
determining that mode switching to the determined target duplexing mode is necessary, when the determined target duplexing mode is different from the current duplexing mode,
wherein the service area using the time division duplexing mode is located within the service area using the frequency division duplexing mode..

4. The method as claimed in claim 3, wherein the service area of the time division duplexing mode is an area in a good channel environment.

5. The method as claimed in claim 3, wherein a data rate, a SINR, a velocity, and a service type of the mobile station are additionally considered in determining if the mode switching to the target duplexing mode is necessary.

6. The method as claimed in claim 2, wherein, when there are no wireless resources for the determined target duplexing mode, the current duplexing mode is maintained.

7. The method as claimed in claim 6, wherein a priority for duplexing mode switching in a next scheduling period is given to a mobile station maintaining the current duplexing mode.

8. The method as claimed in claim 7, further comprising the step of dropping a service provided to a mobile station that maintains the current duplexing mode during a time period longer than a predetermined threshold period.

9. The method as claimed in claim 2, wherein the step of switching the current duplexing mode comprises the steps of:
dividing the wireless resources of the base station into first wireless resources for the time division multiplexing mode and second wireless resources for the frequency division multiplexing mode;
allocating uplink wireless resources extracted from the first wireless resources to a mobile station requesting mode switching into the time division duplexing mode; and
allocating uplink wireless resources extracted from the second wireless resources to a mobile station requesting mode switching into the frequency division duplexing mode.

10. A method for switching a current frequency band of a mobile station in a cellular system in which at least one base station supports a wideband and a narrowband, the method comprising the steps of:
determining if it is necessary to switch the current frequency band of the mobile station in a predetermined scheduling period; and
switching the current frequency band of the mobile station when there are available wireless resources for a target frequency band into which the mobile station wants to switch the current frequency band.

11. The method as claimed in claim 10, wherein the step of determining if it is necessary to switch the current frequency band comprises the steps of:
determining the wideband as the target frequency band for a mobile station located within a wideband service area;
determining the narrowband as the target frequency band when the mobile station is located out of the service area of the wideband and within a narrowband service area; and
determining that mode switching to the determined target frequency band is necessary, when the determined target frequency band is different from the current frequency band,
wherein the wideband service area is located within the narrowband service area.

12. The method as claimed in claim 11, wherein the wideband service area is an area in a good channel environment.

13. The method as claimed in claim 11, wherein a data rate, a SINR, a velocity, and a service type are additionally considered in determining if the mode switching to the target frequency band is necessary.

14. The method as claimed in one of claims 10 to 13, wherein, when there are no wireless resources for the determined target frequency band, the current frequency band is maintained.

15. The method as claimed in claim 14, wherein a priority for frequency band switching in a next scheduling period is given to a mobile station maintaining the current frequency band.

16. The method as claimed in claim 15, further comprising the step of dropping a service provided to a mobile station that maintains the current frequency band during a time period longer than a predetermined threshold period.

17. A cellular system comprising:
a mobile station for transmitting duplexing mode switching request information, when it is necessary to switch a current duplexing mode of the mobile station; and
a base station for determining, based on the duplexing mode switching request information from the mobile station, if it is necessary to switch the current duplexing mode of the mobile station, and commanding the mobile station to switch the current duplexing mode when there are available wireless resources for a target duplexing mode into which the mobile station wants to switch the current duplexing mode.

18. The cellular system as claimed in claim 17, wherein the base station supports a time division duplexing mode and a frequency division duplexing mode.

19. The cellular system as claimed in claim 18, wherein the base station determines the time division duplexing mode as the target duplexing mode for a mobile station located within a service area using the time division duplexing mode, determines the frequency division duplexing mode as the target duplexing mode when the mobile station is located out of the service area of the time division duplexing mode and within a service area using the frequency division duplexing mode, and determines that mode switching to the determined target duplexing mode is necessary, when the determined target duplexing mode is different from the current duplexing mode,
wherein the service area using the time division duplexing mode is located within the service area using the frequency division duplexing mode.

20. The cellular system as claimed in claim 19, wherein the service area of the time division duplexing mode is an area in a good channel environment.

21. The cellular system as claimed in claim 19, wherein the duplexing mode switching request information includes a data rate, a SINR, a velocity, and a service type of the mobile station.

22. The cellular system as claimed in claim 18, wherein, when there are no wireless resources for the determined target duplexing mode, the base station maintains the current duplexing mode.

23. The cellular system as claimed in claim 22, wherein the base station gives a priority for duplexing mode switching in a next scheduling period to a mobile station maintaining the current duplexing mode.

24. The cellular system as claimed in claim 23, wherein the base station drops a service provided to a mobile station that maintains the current duplexing mode during a time period longer than a predetermined threshold period.

25. The cellular system as claimed in claim 18, wherein the base station divides the wireless resources of the base station into first wireless resources for the time division multiplexing mode and second wireless resources for the frequency division multiplexing mode, allocates uplink wireless resources extracted from the first wireless resources to a mobile station requesting mode switching into the time division duplexing mode, and allocates uplink wireless resources extracted from the second wireless resources to a mobile station requesting mode switching into the frequency division duplexing mode.
